# EUROPEAN PATENT SPECIFICATION

(11) **EP 1 588 824 B1**
(45) Date of publication and mention of the grant of the patent: **11.07.2007**
(21) Application number: 05425241.6
(22) Date of filing: 19.04.2005
(51) Int. Cl.: B29C 47/92, B29C 47/22

(54) **Device for adjusting the thickness of the extruded parison in a blow molding machine**
Vorrichtung zur Einstellung der Dicke eines extrudierten Vorformlings in einer Blasformvorrichtung
Dispositif pour ajuster l'épaisseur d'une paraison extrudée dans une machine de moulage par injection

(30) Priority: 19.04.2004 IT MI20040764
(43) Date of publication of application: 26.10.2005
(73) Proprietor: Plastiblow s.r.l., 20094 Corsico MI (IT)
(72) Inventor: Tonelli, Franco, 22070 Carbonate CO (IT)
(74) Representative: Concone, Emanuele

(56) References cited:
- WO-A-00/05054
- GB-A- 1 088 039
- US-A- 3 218 672

## Description

The present invention relates to machines for the blow molding of thermoplastic materials, and in particular to a device for adjusting the thickness of the extruded parison in an extruder head preferably of the multiple outlet type that simultaneously feeds several molding cavities.

It is known that in order to obtain flasks, bottles, containers and other hollow elements of thermoplastic material there is used a machine that provides a plastic extruded tube (called "parison") that is then closed in a mold and blown to obtain the desired product.

The molten thermoplastic material (called "melt") coming from the extruder is turned into parison by a ring-shaped die, that has a passage area adjustable through relative movement between the male member and the female member, i.e. by moving either one or the other of said members.

In fact in order to obtain the desired thickness at the different portions of the blown product (e.g. at the neck and body of a bottle) it is necessary to adjust the parison thickness by changing the die passage area. This adjustment takes place through an actuator that controls the mobile member in the die and a position sensor that provides a feedback for the control of said actuator. In other words, the profile of the parison is programmed for each length that will form a product, so as to correspond to the various portions of the product.

In order to have a high adjustment precision, the actuator preferably consists of a brushless electric motor that drives a ball screw. However such an actuator is expensive, and there is also the risk that a failure of the sensor and/or of the control system leads to a break due to excessive travel in the die movement if the motor is not stopped at the right time. With the purpose of limiting said risks, mechanical end stops and/or redundant systems have to be provided to increase the device reliability, which results in making it even more complicated and expensive.

A possible alternative is to use a hydraulic actuator that has a well-defined travel and thus prevents the risk of an excessive travel. But this type of actuator is less precise and requires the presence of a dedicated hydraulic circuit, whereby the machine is still quite complicated and expensive.

Another similar alternative is disclosed in US-A-3,218,672 that illustrates an apparatus for production of hollow bodies in which the die passage is adjusted in a non-linear manner by a cam that acts on the die through an hydraulic cylinder.

Further drawbacks come up when, in order to increase the productivity of the extruder, there are used multiple extruder heads that through several dies simultaneously obtain several parisons that are taken by molds having several cavities. The conventional arrangement to adjust these multiple dies consists in arranging the actuator on top of the extruder head and have it directly drive all the dies. However it is possible that, due to various reasons, in one or more of the multiple dies driven by the actuator there is a greater resistance to the flow of the melt, which results in an asymmetric load on the connection to the actuator that gives rise to other types of problems.

In fact, due to deflections in the connection caused by said asymmetry, there is the possibility of a movement that is not uniform among all the dies. In such a case the obtained parisons would have different profiles and therefore the products in the various cavities of the mold would have different weights.

A specific drawback also arises with the above-described first type of actuator, in that it operates properly only when subjected to an axial load whereas with a load that has a radial component, caused by the asymmetry, the operation is not smooth and there is a rapid wear of the screw as well as a risk of seizure. On the other hand it is not economically feasible to use a brushless motor with screw connection for each single die.

When using a hydraulic cylinder as actuator this problem does not exist, but the problem of the asymmetric load remains and it can be solved only by directly connecting an actuator to each single die. However, even with this cheaper type of actuator said arrangement results economically disadvantageous and it implies the presence of a quite complicated hydraulic circuit.

Therefore the object of the present invention is to provide a device which overcomes the above-mentioned drawbacks.

This object is achieved by means of a device which is defined by the combination of features of claim 1. Other advantageous features are disclosed in the dependent claims.

The main advantage of the connection through the eccentric shaft and the rods is that the adjustment range is implicitly defined by the eccentric profile, whereby it is possible to dispense with additional components intended to prevent possible breaks due to excessive travel and/or with the hydraulic circuit (with respect to a device with a hydraulic actuator). In fact in this way the risk of break is eliminated since a possible additional driving of the actuator results anyway in a movement of the die within the intended adjustment range.

A second great advantage of the present device in the case where it is applied to a multiple extruder head is the fact that the possible asymmetry of the load is transferred to the fixed supports of the shaft, whereby the device can always operate under ideal conditions.

Another advantage of this device is that all the head dies are synchronously moved through a single drive, without any risk of non-uniform movement and without any need for multiple actuators, thanks to the fact that all the rods that move the various dies are rigidly connected to the shaft that undergoes a rotation proportional to the movement of the actuator.

These and other advantages and characteristics of the device according to the present invention will be clear to those skilled in the art from the following detailed description of an embodiment thereof, with reference to the annexed drawings wherein:
Fig.1 is a side view of a device according to the invention, mounted on a prior art head;
Fig.2 is a front view of said device; and
Fig.3 is a simplified top plan view of said device.

With reference to said figures, there is seen that a device according to the invention includes a motor 1 with a reducer 2 that drives into rotation a driving pulley 3. For ease of construction of the machine, motor 1 complete with reducer 2 and pulley 3 is preferably arranged on the same plane and with its axis parallel to an eccentric shaft 5, carried by two vertical supports 6 secured on the machine structure, which is moved by a driven pulley 4 that receives the motion from said pulley 3 through a toothed belt 8 or the like. Two rods 7, one for each die, are coupled to shaft 5 through big ends 7' and the vertical motion of each rod 7 results in turn in a movement in the relevant die 10 through a pair of columns 9.

More specifically, the eccentric shaft 5 has a variable cross-section made up of end journals of smaller diameter, at which the shaft is carried by supports 6, and a central portion of greater diameter that in practice is a long crank pin at which the ends 7' of rods 7 are mounted. Preferably, the two above-mentioned diameters are internally tangent so that the eccentricity "e" is equal to half of their difference and the big ends 7' can be solid since the front mounting of the shaft is possible.

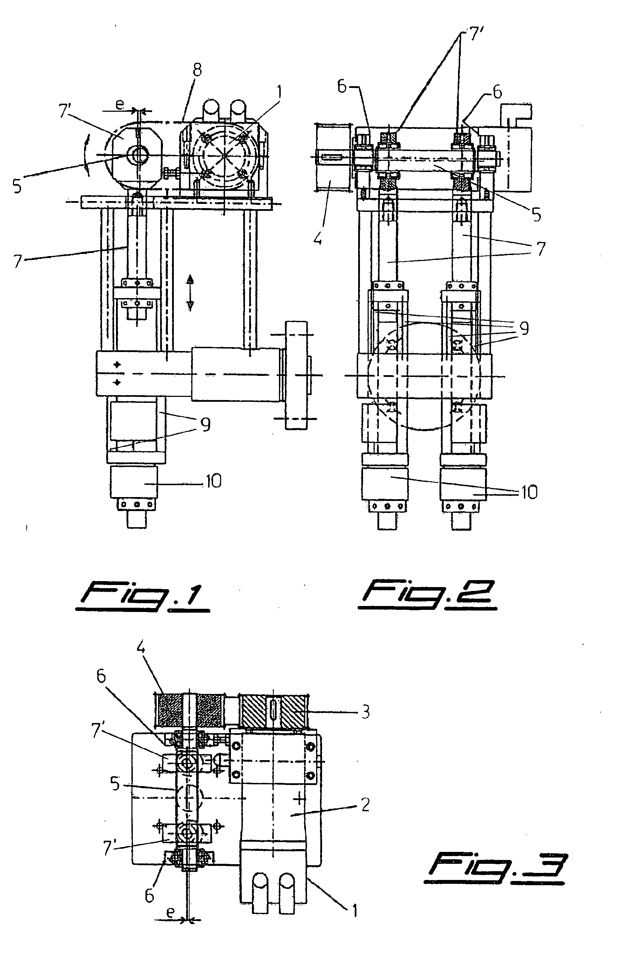

In the position illustrated in fig.1 shaft 5 is at mid-travel, i.e. the centers of the two diameters are aligned along a horizontal axis. From this position, the rotation of shaft 5 in one direction or the other causes a greater or smaller aperture of dies 10 through the synchronous vertical motion or the respective rods 7 and columns 9. When the two diameters of shaft 5 are aligned along a vertical axis an end of the travel has been reached, and a further rotation only reverses the direction of motion of the die thus preventing the risk of break. Moreover, since rods 7 are coupled to shaft 5 through ends 7', possible asymmetric loads on the various dies 10 are transferred to supports 6 of said shaft 5.

It should be noted that the small eccentricity "e" of shaft 5 does not affect the smooth movement of rods 7 and columns 9, since its small amount is negligible with respect to the length of said components that easily absorb said eccentricity through a small deflection (e.g. "e"=4 mm whereas the die is at 300-400 mm). For this reason it is possible to dispense with an articulated joint between rods 7 and shaft 5, which can anyway be provided for specific applications where it is not possible and/or desirable to absorb the eccentricity through deflection as mentioned above.

From the description above it is therefore clear that by using the eccentric shaft there is obtained a simpler and more reliable device, as well as the uniform distribution of the push force on all dies 10 and consequently an identical distribution of the profile on all parisons, which is the condition needed to prevent variations in weight of the products formed in the various cavities of the mold.

It is clear that the above-described and illustrated embodiment of the device according to the invention is just an example susceptible of various modifications. In particular, the shape, arrangement and number of the elements that make up the kinematic chain transmitting the motion can be somewhat changed according to specific construction needs, for example by arranging the big ends 7' externally to supports 6 and/or to the driven pulley 4, or by adopting any number or rods 7 from one up, possibly driving two or more dies through a single rod and so on.

Furthermore, shaft 5 may have a longitudinal profile different from that illustrated above, e.g. by dividing the greater diameter in multiple lengths in the longitudinal direction so as to obtain a separate crank pin at each big end 7'. In other words, the big ends 7' are always secured at a cylindrical eccentric portion of the shaft 5 but the number, diameter and arrangement of said eccentric portions may change.

Similarly, motor 1 and pulleys 3, 4 with belt 8 may be replaced by another mechanically equivalent type of actuator, such as a hydraulic or pneumatic actuator directly connected to shaft 5.

## Claims

1. Device for adjusting the thickness of the extruded parison in an extruder head in a blow molding machine, including an actuator that adjusts the aperture of one or more dies (10) having adjustable passage area, **characterized in that** the connection between the actuator and the dies (10) is achieved through an eccentric shaft (5), carried by supports (6) secured onto the head structure, to which there are coupled one or more rods (7) each of said one or more rods (7) being coupled to said eccentric shaft (5) through a big end (7') secured at a cylindrical eccentric portion of the shaft (5).

2. Device according to claim 1, **characterized in that** the actuator consists of a motor (1) with a reducer (2) that drives into rotation a driving pulley (3) connected through a toothed belt (8) to a driven pulley (4) integral with the eccentric shaft (5).

3. Device according to claim 2, **characterized in that** the motor (1) complete with the reducer (2) and the driving pulley (3) is arranged on the same plane and with its axis parallel to the eccentric shaft (5).

4. Device according to one of the preceding claims, **characterized in that** the eccentric shaft (5) has a cross-section made up of end journals of smaller diameter and a central portion of greater diameter.

5. Device according to claim 4, **characterized in that** the two smaller and greater diameters of the shaft (5) are internally tangent and the at least one rod (7) is mounted on said shaft (5) through a solid end (7').

## Patentansprüche

1. Vorrichtung zur Einstellung der Dicke des extrudierten Vorformlings in einem Extruderkopf in einer Glasformvorrichtung enthaltend ein Stellglied, das die Öffnung einer oder mehrerer Düsen (10) mit einstellbarem Durchlassbereich einstellt, **dadurch gekennzeichnet, dass** die Verbindung zwischen dem Stellglied und den Düsen (10) mittels einer exzentrischen Welle (5) hergestellt ist, die von auf dem Kopfaufbau befestigten Trägern (6) getragen wird, mit denen eine oder mehrere Stangen (7) verbunden sind, wobei jede der Stangen (7) mit der exzentrischen Welle (5) über ein großes Ende (7'), das an einem zylindrischen exzentrischen Abschnitt der Welle (5) befestigt ist, verbunden ist.

2. Vorrichtung nach Anspruch 1, **dadurch gekennzeichnet, dass** das Stellglied aus einem Motor (1) mit einer Untersetzung (2) besteht, die ein Antriebsrad (3) in Rotation versetzt, dass über einen Zahnriemen (8) mit einem angetriebenen Rad (4) verbunden ist, welches einstückig mit der exzentrischen Welle (5) ist.

3. Vorrichtung nach Anspruch 2, **dadurch gekennzeichnet, dass** der Motor (1) zusammen mit der Untersetzung (2) und dem Antriebsrad (3) in derselben Ebene wie die exzentrische Welle (5) und mit einer dazu parallelen Achse angeordnet ist.

4. Vorrichtung nach einem der vorangehenden Ansprüche, **dadurch gekennzeichnet, dass** die exzentrische Welle (5) einen Querschnitt hat, der aus Stirnzapfen eines kleineren Durchmessers und einem Mittelabschnitt eines größeren Durchmessers aufgebaut ist.

5. Vorrichtung nach Anspruch 4, **dadurch gekennzeichnet, dass** die zwei kleineren und der größere Durchmesser der Welle (5) sich innen berühren und die mindestens eine Stange (7) auf der Welle (5) über ein massives Ende (7') befestigt ist.

## Revendications

1. Dispositif pour ajuster l'épaisseur de la paraison extrudée dans une tête d'extrudeuse dans une machine d'extrusion soufflage, incluant un actionneur qui ajuste l'ouverture d'une ou plusieurs filière(s) (10) ayant des zones de passage ajustables, **caractérisé en ce que** la connexion entre l'actionneur et les fillères (10) est réalisée à travers un arbre (5) excentrique, porté par des supports (6) fixés sur la structure de tête, à laquelle ils sont couplés par une ou plusieurs barre(s) (7) chacune desdites une ou plusieurs barre(s) (7) étant couplée audit arbre excentrique (5) à travers une grande extrémité (7') fixée à une partie excentrique cylindrique de l'arbre (5).

2. Dispositif selon la revendication 1, **caractérisé en ce que** l'actlonneur consiste en un moteur (1) avec un réducteur (2) qui entraîne en rotation une poulie motrice (3) connectée par une courroie dentée (8) à une poulie menée (4) monobloc avec l'arbre excentrique (5).

3. Dispositif selon la revendication 2, **caractérisé en ce que** le moteur (1) avec le réducteur (2) et la poulie motrice (3) est arrangé sur le même plan et avec son axe parallèle à l'arbre excentrique (5).

4. Dispositif selon l'une des revendications précédentes, **caractérisé en ce que** l'arbre excentrique (5) a une section transversale composée de fusée d'extrémité de diamètre inférieur et d'une partie centrale de diamètre supérieur.

5. Dispositif selon la revendication 4, **caractérisé en ce que** les deux diamètres inférieur et supérieur de l'arbre (5) sont intérieurement tangents et la au moins une barre (7) est montée sur ledit arbre (5) à travers une extrémité pleine (7').
